# EUROPEAN PATENT APPLICATION

(11) **EP 4 148 925 A1**
(43) Date of publication of application: **15.03.2023**
(21) Application number: 21306227.6
(22) Date of filing: 08.09.2021
(51) Int. Cl.: H02G 9/02, H02G 15/117, H02G 1/14

(54) **WET DESIGN HIGH VOLTAGE SUBMARINE FIELD AND REPAIR JOINT**

(71) Applicant: Nexans, 92400 Courbevoie (FR)
(72) Inventor: ROD, Alf Erik, 1788 Halden (NO)
(74) Representative: Ipsilon

(57) **Abstract**

Joint assembly for two high voltage submarine cables (20, 30) of wet or semi wet design, comprising a water permeable enclosure (10) for receiving the two cables (20, 30) at opposite ends (16, 17) of the enclosure, and at least one joint unit (40, 50, 60) within said enclosure, each joint unit for connecting corresponding phase conductors of each of the two cables (20, 30). A method of joining two three-phase high voltage submarine cables (20, 30) and a wet design electrical subsea premolded joint (100).

## Description

### Objective of the invention

The present invention in general relates to a wet design electrical subsea pre-molded joint, a wet design high voltage submarine field and repair joint, and a method of joining two wet or semi wet cables.

### Background

Offshore installations like offshore wind driven turbine generators supply power to a collection station, which in turn supplies power ashore. This is achieved by means of submarine power cables. These submarine power cables are connected to the offshore installation at one end, lie on the seabed and are connected to another installation on the other end. The section where the cable lies on the seabed is called the static section. Between the offshore installation and the zone where the cable lies on the seabed, the cable is raised from the seabed and enters the offshore installation. This is in part due to the potential for localised scouring to occur near the structure. The section where the cable is raised from the seabed is called the dynamic section.

The offshore wind market is considered to raise normal common operating voltage from 36 kV to 72.5kV and even to 145 kV levels for array cables, and export cables to shore may be designed as high as for up to 550 kV.

Conventional cables at this voltage level use a metallic water barrier made of lead, but these cables are not well adapted to be utilized in a dynamic situation, i.e. as experienced in the dynamic section, due to poor performance. In this dynamic section the cable is subjected to loads from waves, current and movements of the offshore installation. These loads cause variations in tension and curvature in the cable that may generate fatigue damage in the various cable components, especially in the metallic water barrier.

A cable of a dry design is a cable with a water barrier such as an extruded lead sheath or other metal barriers over the insulation

A cable of semi-wet design is a cable with a polymer (e.g. PE) sheath over a non-fully impervious metallic screen (e.g. metal tapes or thermoglued foils).

A cable of a wet design is a cable without any polymeric sheath over a non-fully impervious metallic screen (e.g. metal tapes) or without a metallic screen.

Cables adapted for the dynamic sections will have a wet design, or alternatively a semi-wet design.

Cables in the dynamic section may get damaged by falling objects or due to fatigue and will need to be repaired or undergo maintenance from time to time. The static cables can be damaged by fishing equipment, anchors etc. However today there is no subsea solution available for easily repairing these cables. The prior art solution to this problem are dry-mate dry-design joints that underline the importance of the water tightness of said joint. This water tightness would be compromised by the water ingress in these wet or semi-wet cables.

Installation of a field and repair joint must be easy and fast. The weather window for the repair is often narrow and an increase in installation time means that there is harder to find a long enough weather window for the installation.

It would be highly desirable to be able to provide for an easy solution for jointing wet or semi-wet design cable cables, so as to interfere as little as possible with surface operations.

### Summary of the invention

Thus, according to this invention there is provided a joint unit, a dry-assembly wet-design repair joint assembly and a method for providing a field and repair joint for wet-design cables.

The present invention is defined by the appended claims and in the following:
In a first aspect, the invention relates to a pre-molded joint comprising:
   - a tubular first layer made of a semiconducting material;
   - a second layer made of an insulating material surrounding the outer surface of the first layer; and
   - a third layer made of a semiconducting material surrounding the outer surface of the second layer
wherein the first layer defines a tubular chamber suitable for surrounding an electrical joint between two cable conductors, and
wherein at least one of the layers of the joint are water permeable.

In one aspect all the layers of the joint are water permeable.

That at least one of the layers of the joint is water permeable ensures that the joint is a wet design joint.

The wet design may also allow for water to diffuse into the joint along the boundaries/interfaces between the layers of the pre-molded joint, wherein passageways are formed along the boundaries when these do not adhere completely to each other. In use water may also be allowed to penetrate longitudinally into the tubular chamber along and within the joint cables.

The first layer of the pre-molded joint has a tubular shape with the chamber internally and the second layer surrounding the outside and possibly also surrounding end sections thereof. The third layer surrounds the second layer externally.

Thus, by use of this joint, the electrical insulation is obtained by the pre-molded joint. This joint has a high dielectric strength so that it can withstand higher voltages. Moreover, the pre-molded joint defines the chamber into which the conductor joint of the cables will be placed.

In one embodiment of the invention, the joint is not covered by a water barrier, as the objective of the first aspect of the invention is to provide a wet design joint.

In one embodiment, each of the layers is made of a same elastomeric material, typically ethylene propylene diene monomer (EPDM), crosslinked polyethylene (XLPE) or silicon rubber.

Therefore, inner and outer semiconducting layers, i.e. the first and third layers, act as electrostatic shields for the spliced cable.

In one embodiment, the interface between said outer semiconducting layer and said insulating layer, i.e. the third and second layer, has a curved profile.

In this embodiment, the curved profile of the interface provides the same stress relieving effect as a deflector in a stress relief cone in order to prevent electrical breakdown.

In a second aspect, the invention relates to a joint assembly for joining two high voltage submarine cables of wet or semi-wet design, comprising
- a water permeable enclosure for receiving the two cables at opposite ends of the enclosure, and
- at least one joint unit within said enclosure.

In the present specification, the term "water permeable enclosure" is intended to mean a non-watertight enclosure, in the sense that the enclosure will be flooded when arranged under water. The term "water permeable" when used to describe a structure refers to a structure with one or more openings/passageways such that the structure is flooded when arranged under water. The term "water permeable" when used to describe a material refers to a material where water can penetrate into and across the material itself. The term "openings/passageways" as used here refers to any element providing a path for water to pass through including but not limited to apertures, channels, diffusion and permeation pathways. Herein connecting is intended to mean electrically connecting.

In a third aspect, the invention relates to a method for joining two high voltage submarine cables of wet or semi-wet design, the method comprising the steps of:
a) providing two cables of wet or semi-wet design
b) providing a joint assembly comprising
   - an open enclosure for receiving a connecting end section of each of the two cables at opposite ends of the enclosure, and
   - at least one joint unit within said enclosure;
c) joining the two cable, using at least a joint unit.

In an embodiment of the joint assembly according to the second aspect or of the method according to the third aspect of the invention, the at least one joint unit is water permeable.

In an embodiment of the joint assembly according to the second aspect or of the method according to the third aspect of the invention, each cable is a three-phase high voltage submarine cables, and the joint assembly comprises at least three joint units, each joint unit for joining the corresponding phase conductors of each of the two cables

In an embodiment of the joint assembly according to the second aspect or of the method according to the third aspect of the invention, the enclosure may comprise at least one aperture in order to ease the flooding of the enclosure.

In another embodiment of the joint assembly or of the method, the at least one aperture may be a hole or a slit on a wall of the housing.

In another embodiment of the joint assembly or of the method, the at least one aperture may be at least two apertures, at least three apertures, at least five apertures or a plurality of apertures.

In another embodiment of the joint assembly or of the method, the at least one aperture may be evenly arranged around the circumference of the enclosure in order to ease the flooding of the enclosure.

In another embodiment of the joint assembly or of the method, the at least one aperture may be evenly arranged along the length of the enclosure in order to ease the flooding of the enclosure.

In another embodiment of the joint assembly or of the method, the joint assembly may be fully saturated with water. The cables connected to the assembly may also be fully saturated with water.

In another embodiment of the joint assembly or of the method, the enclosure may be open by allowing water ingress at or around the entry of the cables in the housing.

In another embodiment of the joint assembly or of the method, the enclosure comprises two bend guides, bend stiffeners or bend restrictors located at opposite ends of the enclosure.

In another embodiment of the joint assembly or of the method, the joint units may be of wet design. In another embodiment of the invention, the joint units may be fully saturated with water

In another embodiment of the joint assembly or of the method, the joint units may advantageously be a pre-molded joint according to the first aspect of the invention. Here the person skilled in the art will understand that the two cable connectors may be jointed in a first step by conventional means, for example by being pressed, screwed or welded together by conventional methods. Then the pre-molded joint according to the first aspect of the invention will be placed on top of the connector joint.

In another embodiment of the joint assembly or of the method, the joint units may be a type of T-connectors, being configured substantially in the shape of a "T". In one embodiment of the joint assembly each of the joint units are pairs of T-connectors.

One example of such a unit is the T-connector supplied by Euromold^{®} (a Nexans company). Such T-connectors are used with great advantage in the present joint assembly, since their plug-in functionality makes possible relatively easy removal or replacement of cable connections that may be required in the maintenance operations concerned.

In another embodiment of the invention, the T-connectors may be oriented within said enclosure with their central legs extending substantially in opposite directions between said one and opposite ends.

In another embodiment of the invention, the dimensions of the enclosure may be longest along the axis between said one and opposite ends for receiving the two cables of the enclosure.

In another embodiment of the invention, the enclosure is preferably cylinder shape.

In an embodiment of the joint according to the first aspect of the invention, of the joint assembly according to the second aspect of the invention or of the method according to the third aspect of the invention, each cable may be of wet or semi-wet design.

In another embodiment of the joint, of the joint assembly or of the method, each cable may advantageously be of wet design.

In another embodiment of the joint assembly or of the method, all parts are prefabricated to speed up installation time.

In another embodiment of the joint, of the joint assembly or of the method, the at least one joint unit may be dimensioned for voltages up to 550 kV, up to 420kV, up to 362 kV, up to 245 kV, up to 145 kV, up to 72.5 kV or up to 36kV.

In another embodiment of the joint, of the joint assembly or of the method, the at least one joint unit may be dimensioned for voltages over 12 kV, over 36 kV, over 52kV or over 72.5 kV.

In another embodiment of the joint, of the joint assembly or of the method, the at least one joint unit may be dimensioned for voltages over 12 kV and under 550 kV, over 12 kV and under 420 kV, over 12 kV and under 362 kV, over 12 kV and under 245 kV, or over 12 kV and under 145 kV, over 12 kV and under 72.5 kV or over 12 kV and under 36 kV.

In another embodiment of the joint, of the joint assembly or of the method, the at least one joint unit may be dimensioned for voltages over 36 kV and under 550 kV, over 36 kV and under 420 kV, over 36 kV and under 362 kV, over 36 kV and under 245 kV, or over 36 kV and under 145 kV or over 36 kV and under 72.5 kV.

In another embodiment of the joint, of the joint assembly or of the method, the at least one joint unit may be dimensioned for voltages over 52 kV and under 550 kV, over 52 kV and under 420 kV, over 52 kV and under 362 kV, over 52 kV and under 245 kV, or over 52 kV and under 145 kV or over 52 kV and under 72.5 kV.

In another embodiment of the method according to the third aspect of the invention, the method may comprise a step of lowering the joint assembly under water such that the enclosure is flooded with water, after the step of connecting the corresponding phase conductors.

In a fourth aspect, the invention relates to a cable joint comprising two high-voltage submarine cables and a joint assembly according to the second aspect of the invention.

In an embodiment of the cable joint according to the fourth aspect of the invention, the joint assembly and/or the two high-voltage cables are fully saturated with water.

### Short description of the drawings

In the following description this invention will be further explained by way of exemplary embodiments shown in the drawings:
Fig. 1 shows a longitudinal cross-section of a pre-molded joint according to the first aspect of the invention.
Fig. 2 shows a longitudinal cross-section of a joint made with a pre-molded joint according to the first aspect of the invention.
Fig. 3 is a cross-sectional view of the joint assembly.
Fig. 4 is a front side view of the joint assembly.
Fig. 5 is an enlarged cross-sectional view of T-connectors assembled for use in a specific embodiment of this invention.

### Detailed description of the invention

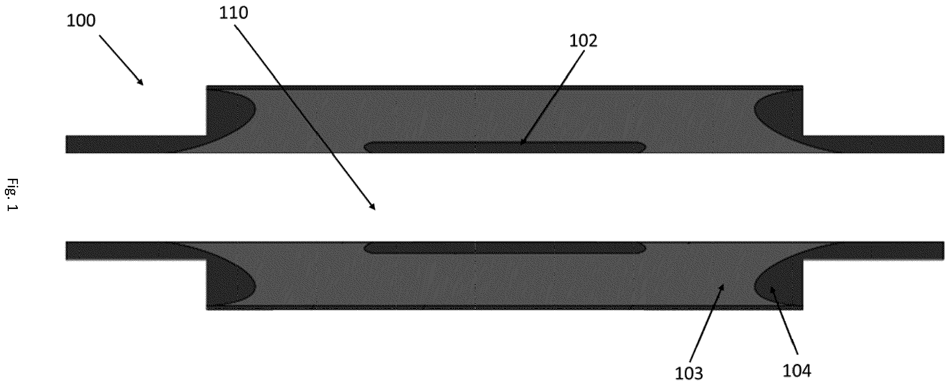

Fig. 1 shows a longitudinal cross-section of a pre-molded joint 100 of the invention. This pre-molded joint 100 is double-ended to connect two electrical cables together.

The pre-molded joint 100 comprises
- a first layer 102 made of a semiconducting material;
- a second layer 103 made of an insulating material surrounding the first layer; and
- a third layer 104 made of a semiconducting material surrounding the second layer
wherein said first layer define a chamber 110 suitable for surrounding an electrical joint between two cable conductors.

To make a cable joint, the end section of a first cable 120 is prepared for joining by stripping off the various layers (the semiconducting first layer 122, the insulation second layer 123 and the outer semiconductive third layer 124, obtaining a connecting end section of the cable 120 suitable for connecting to another connecting end section of a second cable 130, prepared in the same way. The pre-molded joint 100 is slided on one of the end section of the cables 120, 130. The stripped conductor end 121, 131 of both cables are then connected using known techniques, such as pressing, welding or screwing the conductors ends 121,131 together, possibly using a connection ferrule, forming a conductor joint 125. The pre-molded joint is then slided over the conductor joint 125, so that the first layer 102 made of a semiconducting material covers the conductor joint. Further so that the second layer 103 made of an insulating material covers at least part of the insulation second layer 123, 133 and so that the third layer 104 made of a semiconducting material covers at least part of the outer semiconductive third layer 124 and is in electrical contact therewith.

To speed up the installation of the joint techniques based on welding may be avoided and a connection ferrule may be preferred as conductor joint.

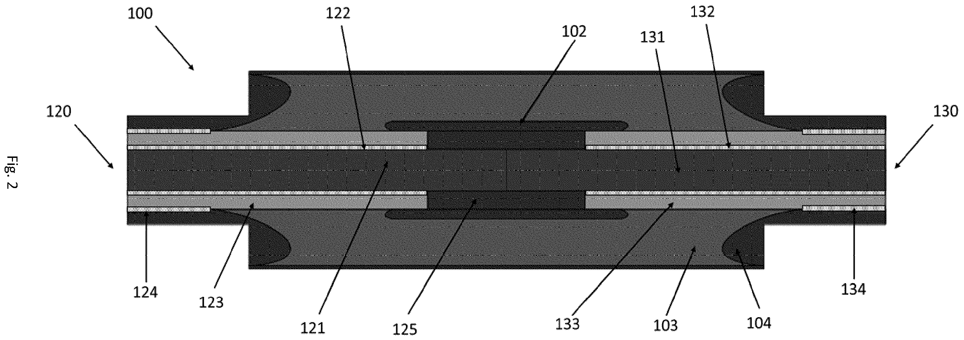

The cross-section of the resulting joint is shown in FIG. 2.

According to the invention, the semiconducting layer 102 is surrounded by an insulating layer 103 surrounded itself by a second semiconducting layer 104. The second semiconducting layer 104 extends all along the chamber 110 while the insulating layer 103 acting as insulating means and the first semiconducting layer 102 extend partially along the chamber 110.

The interface between insulating layer 104 and semiconducting layer 104 has a curved profile in order to prevent electrical breakdown. The curved profile of the interface has the same stress relieving effect as a deflector in a stress relief cone. Layers 102, 103 and 104 are moulded together in one single element 100 and can be made of a same elastomeric material, typically ethylene propylene diene monomer (EPDM), crosslinked polyethylene (XLPE) or silicon rubber except that the material used for layers 102 and 104 is also doped, for example with carbon black. Alternatively layers 102, 103 and 104 can be made of the same materials as at least one of the cable 120.

For transition joints, that is to say joints between two cables of different diameters, the pre-molded joint may be designed to so that each half of the chamber 110 has a cross-section matching the cross sections of each cable.

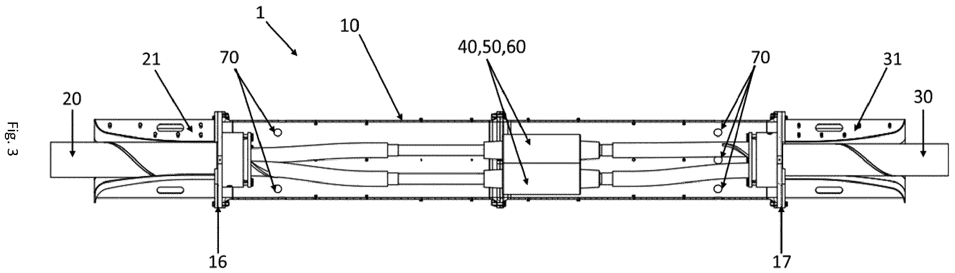

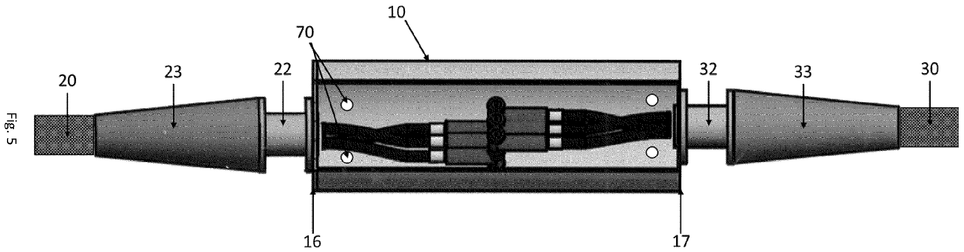

An exemplary joint assembly according to the invention is shown in fig.3. The joint assembly, comprises a first submarine three-phase power cable 20, a second submarine three-phase power cable 30. First cables 20 and second cable 30, may be two part of a damaged three-phase power cables that was damaged or broken and needs to be repaired. What is done at this point in the system is to electrically connect each phase 40,50,60 of the three-phase cable 20 to each corresponding phase 40,50,60of cable 30. This takes place inside an enclosure 10 shown in fig. 3, fig. 4 and 5. The enclosure 10 may advantageously comprise at least one aperture 70 in order to ease the flooding of the enclosure 10. The at least one aperture 70 may be a hole or a slit. The enclosure 10 will be flooded when placed under the sea level. Before entering enclosure 10, the cables 20,30 may be each surrounded by a bend guide 21,31, respectively, according to known methods, as shown on fig.3. Alternatively, a bend restrictor or bend stiffener 23,33 may be used. Moreover, lead-in means 22,32 for entry of each cable into the enclosure may be provided, as shown on fig. 5, also as known per se. Preferably, the lead-ins 22,32 are not sealed in a water-tight manner to the enclosure, such that water may easily enter the enclosure when submerged in water.

In the drawings the at least one aperture 70 are round holes, in alternative embodiments, the apertures may be of any shape or form or combination thereof, such as slits, provided the enclosure may be easily flooded with water when submerged in water.

The at least one aperture 70 may be spaced along the circumference of the enclosure, arranged close to each of the two ends of the enclosure etc. in order to achieve optimal flooding of the enclosure.

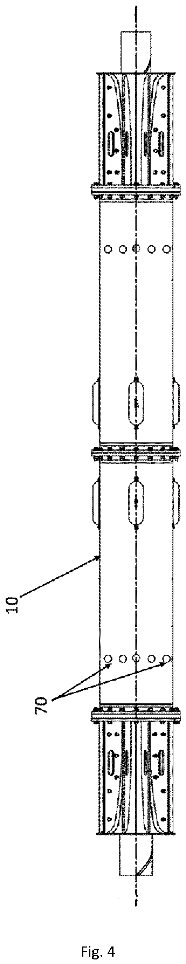

In figure 3 and 4 the enclosure 10 is exemplified as being made of two cylinders connected at their end by a flange. In other embodiments, the enclosure 10 may be in any suitable shape or form, such as any type of splitable or openable box, such as a square box or a cylindrical box, for ease of access for installation of power cables.

The joint unit may advantageously be the pre-molded joint shown in fig. 1-2.

Another embodiment of the assembly 1 where the joint units 40,50,60 are couples of T-connectors is shown more detailed in fig. 5.

As will be seen from fig. 5, T-connectors are directly attached to one another by plugging together at their upper or transverse legs with a through-running electrically conductive path comprising conducting elements. In this manner conductors belonging to cable phases, are connected together.

The T-connectors are oriented so as to be opposed to each other 180 degrees along the axis between the two ends 16,17 of the enclosure 10 i.e. more or less in parallel to the direction of cables 20,30 when entering the enclosure, possibly through bend guides 21,31 and/or lead-ins 22,32.

Lead-ins 22,32 may be provided at both end or side wall 16,17 of enclosure 10. On a side wall there may be provided lifting means (not shown), for example in the form of an eye structure making possible deployment as well as retrieval of the whole assembly with power cables 20,30 connected thereto. It will be understood that depending on water depth at the site of installation, there may be a quite considerable weight to be carried by lifting eye during such operations. In many cases it may be considered advantageous to have the dimensions of enclosure 10 to be largest in a direction between the end or side walls 16 and 17.

## Claims

1. A pre-molded joint (100) comprising:
- a tubular first layer (102) made of a semiconducting material;
- a second layer (103) made of an insulating material surrounding the outer surface of the first layer; and
- a third layer (104) made of a semiconducting material surrounding the outer surface of the second layer
wherein said first layer defines a tubular chamber suitable for surrounding an electrical joint between two cable conductors; and
wherein at least one of the layers of the joint are water permeable.

2. A pre-molded joint (100) according to of claim 1 wherein all the layers of the joint are water permeable.

3. A pre-molded joint (100) according to of claim 1 or 2 wherein the interface between said third layer and said second layer has a curved profile.

4. A pre-molded joint (100) according to claim 1, 2 or 3, wherein each of the layers (102, 103, 104) comprises a same elastomeric material, typically ethylene propylene diene monomer (EPDM), crosslinked polyethylene (XLPE) or silicon rubber.

5. A joint assembly (1) for joining two high voltage submarine cables (20, 30) of wet or semi-wet design, comprising
- a water permeable enclosure (10) for receiving the two cables (20, 30) at opposite ends (16, 17) of the enclosure, and
- at least one joint unit (40, 50, 60) within said enclosure.

6. An assembly (1) according to claim 5, wherein the at least one joint unit (40, 50, 60) is water permeable.

7. An assembly (1) according to claim 5 or 6, wherein each cable (20, 30) is a three-phase high voltage submarine cables, and the joint assembly comprises at least three joint units(40, 50, 60), each joint unit (40, 50, 60) for connecting corresponding phase conductors of each of the two cables (20, 30).

8. An assembly (1) according to any one of claims 5 to 7, wherein the enclosure (10) comprises two bend guides (21, 31) located at the opposite ends (16, 17) of the enclosure.

9. An assembly (1) according to any one of claims 5 to 8, wherein the enclosure (10) comprises at least one aperture (70) to facilitate flooding.

10. An assembly (1) according to any one of claims 5 to 9, wherein each of the joint units (40, 50, 60) are a pre-molded joint according to any of claims 1 to 4.

11. A method for joining two high voltage submarine cables (20, 30) of wet or semi-wet design, the method comprising the steps of:
a) providing the two cables (20, 30)
b) providing a joint assembly (1) comprising
- a water permeable enclosure (10) for receiving a connecting end section of each of the two cables (20, 30) at opposite ends (16, 17) of the enclosure, and
- at least a joint unit (40, 50, 60) arranged within the enclosure, each joint unit for connecting corresponding phase conductors of each of the two cables;
c) joining the corresponding phase conductors of each of the two cables (20, 30) using the at least a joint unit (40, 50, 60).

12. A method according to claim 11, wherein the joint assembly is a joint assembly according to any one of claims 5 to 10.

13. A method according to claim 11 or 12, further comprising a step of lowering the joint assembly (1) under water, after step c), such that the enclosure (10) is flooded with water.

14. A cable joint comprising two high-voltage submarine cables (120), and a joint assembly according to any one of claims 5 to 10.

15. A cable joint according to claim 14, wherein the joint assembly and/or the two high-voltage cables (120) are fully saturated with water.
